# EUROPEAN PATENT APPLICATION

(11) **EP 3 876 176 A1**
(43) Date of publication of application: **08.09.2021**
(21) Application number: 20305242.8
(22) Date of filing: 06.03.2020
(51) Int. Cl.: G06Q 20/40

(54) **METHOD FOR AUTHORIZING A PERSON TO PERFORM A TRANSACTION INVOLVING A SMART CARD**

(71) Applicant: THALES DIS FRANCE SA, 92190 Meudon (FR)
(72) Inventor: LELOUP, Laurent, 13881 GEMENOS Cedex (FR); SOUCHON, Pierre, 13881 GEMENOS Cedex (FR); BOULANGER, Nicolas, 13881 GEMENOS Cedex (FR); SALLES, Jean-Luc, 13881 GEMENOS Cedex (FR)
(74) Representative: Grevin, Emmanuel

(57) **Abstract**

The invention is a method for authorizing a user (50) to perform a transaction involving a biometric transaction appliance (10) comprising a preset rule (23), a set of predefined configuration data and a biometric sensor (40) collecting a biometric data (60) from a person. The method comprises a step in which the biometric transaction appliance identifies an element (80) specific to the transaction and selects a first configuration data from said set according to both the preset rule and said element, a step in which the biometric transaction appliance executes a first biometric algorithm (21) using the first configuration data as tuning parameter of the first biometric algorithm, said first biometric algorithm being preselected in the biometric transaction appliance regardless of the element, and a step in which the biometric transaction appliance authorizes the transaction for the user only if said first biometric algorithm is successful.

## Description

### (Field of the invention)

The present invention relates to methods for authorizing a person to perform a transaction involving a smart card. It relates particularly to methods of authorizing a person to perform a transaction involving a smart card which embeds a biometric sensor.

### (Background of the invention)

Smart cards are portable small devices comprising a memory, a microprocessor and an operating system for computing treatments. They may comprise services like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smart card may also provide computation services based on cryptographic components. In general, smart cards have limited computing resources and limited memory resources and they are intended to connect a host machine which provides them with electric power either in contact mode or contactless mode.

In Biometric domain, the False Acceptance Rate (FAR) is the chance for an impostor to be unduly accepted while the False Rejection Rate (FRR) is the chance for a genuine user to be rejected.

A smart card may contain a biometric sensor like a fingerprint sensor which can contribute to the authentication of the user of the smartcard. Such a smart card may embed a biometric algorithm designed to treat the data captured by the biometric sensor.

It is known to define the parameters of the biometric algorithm before the issuance of the smart card. These parameters are selected beforehand according to the level of security which is required for the operations of the smart card. These parameters are therefore fixed for the entire life of the smart card. The parameters define a unique and definitive behavior for the biometric algorithm.

There is need to enhance the treatment of the biometric data made by the smart card.

### (Summary of the Invention)

The invention aims at solving the above mentioned technical problem.

The object of the present invention is a method for authorizing a user to perform a transaction involving a biometric transaction appliance which is associated to the user. The biometric transaction appliance comprises a biometric sensor that collects a biometric data from a person. The biometric transaction appliance comprises a preset rule and a set of predefined configuration data. The method comprises the steps:
- the biometric transaction appliance identifies an element which is specific to the transaction and selects a first configuration data from said set according to both the preset rule and said element,
- the biometric transaction appliance executes a first biometric algorithm using the first configuration data as tuning parameter of the first biometric algorithm, said first biometric algorithm being preselected in the biometric transaction appliance regardless of the element,
- the biometric transaction appliance authorizes the transaction for the user only if said first biometric algorithm is successful.
Advantageously, the method may comprise the additional steps:
- the biometric transaction appliance selects a second configuration data from said set according to both the preset rule and said element,
- the biometric transaction appliance executes a second biometric algorithm using the second configuration data as tuning parameter of the second biometric algorithm, said second biometric algorithm being preselected in the biometric transaction appliance regardless of the element,
- the biometric transaction appliance authorizes the transaction for the user only if both said first and second biometric algorithms are successful.
Advantageously, the biometric transaction appliance may extracts remarkable items from the biometric data, one of said first and second biometric algorithm may compare said remarkable items with a reference data and the other biometric algorithm may detect spoofing attempt.

Advantageously, the biometric transaction appliance may comprise both a secure element configured to perform the transaction and a microcontroller coupled to the biometric sensor. Both the first and second biometric algorithms may be executed either by the secure element or by the microcontroller.

Advantageously, the biometric transaction appliance may comprise both a microcontroller coupled to the biometric sensor and a secure element configured to perform the transaction. One said first and second biometric algorithms may be executed by the secure element and the other biometric algorithm may be executed by the microcontroller.

Advantageously, the secure element may send a subset of said first and second configuration data to the microcontroller.

Advantageously, the secure element may send to the microcontroller the element which is specific to the transaction.

Advantageously, the element which is specific to the transaction may be a money amount, a currency, a location, a terminal type or a transaction type.

Another object of the invention a biometric transaction appliance allocated to a user. The biometric transaction appliance comprises a biometric sensor collecting a biometric data from a person aiming at performing a transaction involving said biometric transaction appliance. The biometric transaction appliance comprises a preset rule, a set of predefined configuration data at least a processing unit and instructions which cause said processing unit to identify an element specific to the transaction and to select a first configuration data from said set according to both the preset rule and said element, to execute a first biometric algorithm using the first configuration data as tuning parameter of the first biometric algorithm, said first biometric algorithm being preselected in the biometric transaction appliance regardless of the element and to authorize the transaction for the user only if said first biometric algorithm is successful.

Advantageously, the instructions may cause the processing unit to select a second configuration data from said set according to both the preset rule and the element, to execute a second biometric algorithm using the second configuration data as tuning parameter of the second biometric algorithm, said second biometric algorithm being preselected in the biometric transaction appliance regardless of the element and to authorize the transaction for the user only if both said first and second biometric algorithms are successful.

Advantageously, the biometric transaction appliance may extract remarkable items from the biometric data, one of said first and second biometric algorithm may compare said remarkable items with a reference data and the other biometric algorithm may detect spoofing attempt.

Advantageously, the biometric transaction appliance may comprise a secure element configured to perform the transaction and a microcontroller coupled to the biometric sensor. The first and second biometric algorithms may be executed either by the secure element or by the microcontroller. In another embodiment, one said first and second biometric algorithms may be executed by the secure element and the other biometric algorithm may be executed by the microcontroller.

Advantageously, the secure element may be configured to send to the microcontroller either a subset of said first and second configuration data or said element.

Advantageously, the biometric transaction appliance may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary flow diagram for authorizing a person to perform a transaction involving a smart card according to the invention,
- Figure 2 shows a second exemplary flow diagram for authorizing a person to perform a transaction involving a smart card according to the invention, and
- Figure 3 shows a diagram of a smart card according to an example of the invention.

### (Detailed description of the preferred embodiments)

The invention may apply to any type of biometric transaction appliance associated to a user and intended to carry out a transaction with another machine. The biometric transaction appliance may be a smart card or a badge having a different form factor. The transaction may be any type of transaction which requires the authentication of the user of the smart card. For instance, the invention is well-suited for managing payment transactions or physical access control transactions.

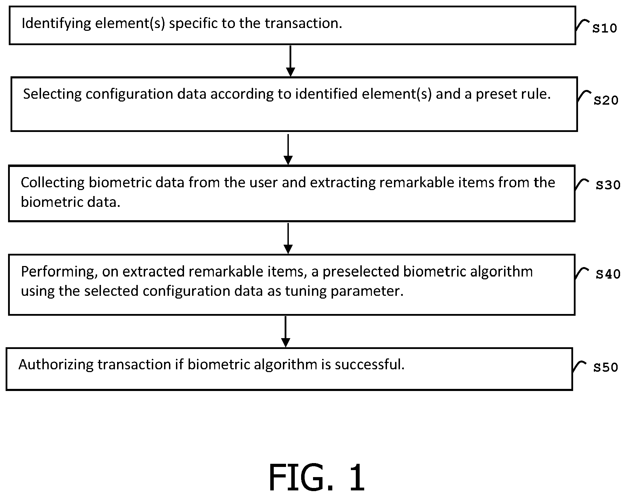

Figure 1 shows a first flow diagram for authorizing a person to perform a transaction involving a smart card according to an example of the invention.

The user requests execution of the transaction between the smart card and another machine. In the example of Figure 1, the smart card executes a process which allows the smart card to deny or accept execution of the transaction.

In this example, the smart card is a bank smart card allocated to a bank customer. The bank smart card embeds a biometric sensor able to capture fingerprint data.

The user (e.g. bank customer) is supposed to request a transaction between the smart card and another physical device. For instance, the transaction may be a payment to be carried out between the smart card and a distant server through a terminal located at a point of sales.

At first step S10, the smart card identifies at least one element specific to the transaction. The smart card may collect an element (data) intrinsic to the transaction like the amount to be payed or the currency.

The smart card may collect an element (data) relating to the context of the transaction like the type of terminal (ex: attended payment terminal or unattended terminal), the location of the terminal or the country in which the transaction will occur.

At step S20, the smart card selects a configuration data according to the element identified at step 10 by applying a preset rule.

The selected configuration data is intended to be used when executing a biometric algorithm on the smart card. More precisely, the smart card will use the selected configuration data as tuning parameter of the executed biometric algorithm. In one example, the selected configuration data may be the threshold defining the False Acceptance Rate (FAR) or the False Rejection Rate (FRR) .

The preset rule and a set of predefined configuration data are assumed to have been previously stored in the smart card. In one example, the preset rule and the set of predefined configuration data may have been written in a non-volatile memory of the smart card during the personalization phase of the smart card. (I.e. before issuance of the smart card). In another example, the preset rule and/or the set of predefined configuration data may have been stored or updated in the smart card after its issuance.

The preset rule specifies which configuration data of the set of configuration data must be elected according to the specific element(s) identified at step 10.

Advantageously, the preset rule may also specify which element(s) must be identified by the smart card. Additionally, the preset rule may also specify which configuration data of the set of configuration data must be selected according to the combination of several specific elements identified at step 10. For instance, the rule may define that a first configuration data is selected for a transaction in US dollars performed in Germany, a second configuration data is selected for a transaction in US dollars performed in U.S. and a third configuration data is selected for a transaction whose amount is above fifty Euros.

At step S30, the biometric sensor of the smart card collects biometric data from the user then the smart card extracts remarkable items (also named key points) from the collected biometric data. For instance, the remarkable items may be fingerprint minutiae.

At step S40, the smart card performs, on extracted remarkable items, a preselected biometric algorithm. The smart card uses the selected configuration data as tuning parameter of the preselected biometric algorithm. For example, the preselected biometric algorithm may compare the extracted remarkable items with a pre-stored reference data corresponding to the user. The pre-stored reference data is assumed to have been stored in the smart card during a previous enrollment phase. It is to be noted that the biometric algorithm is preselected in the smart card regardless of the specific element(s) identified at step 10. In other word, the biometric algorithm is elected before the transaction starts.

At step S50, the smart card authorizes (i.e. does not deny) the transaction only if the execution of the predefined biometric algorithm is successful. In other words, the smart card authorizes the transaction only if the user (whose biometric data has been captured) is recognized as being the genuine user.

The above described steps can be executed in another order. For instance, step S30 may be run before step S10.

The above-described method can be applied to the spoofing detection algorithm instead of the biometric comparison algorithm. Thus the preselected biometric algorithm can be the biometric anti-spoofing algorithm. In this case, the smart card may perform the biometric anti-spoofing algorithm on collected biometric data at step S40. Then at step S50, the smart card may perform, on extracted remarkable items, a predefined biometric algorithm for comparison with a reference data and may authorize the transaction if both biometric algorithms are successful.

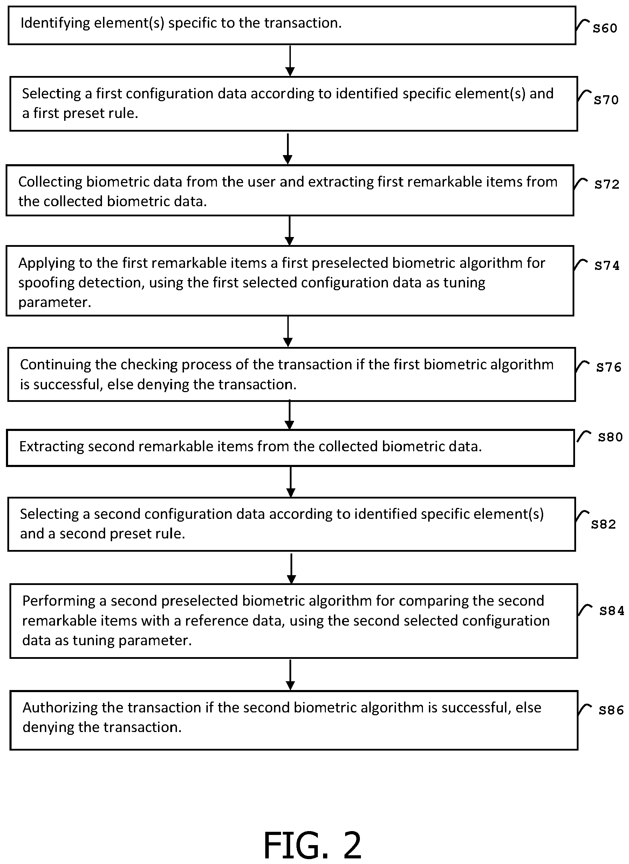

Figure 2 shows a second flow diagram for authorizing a person to perform a transaction involving a smart card according to an example of the invention.

In this example, the smart card is similar to the bank smart card of Figure 1.

The user (e.g. bank customer) is supposed to request a transaction between the smart card and another physical device. For instance, the transaction may be a cash withdrawal to be carried out between the smart card and an automated teller machine (ATM).

The first step S60 of Figure 2 is similar to step S10 of Figure 1.

At step S70, the smart card selects a first configuration data according to the specific element(s) identified at step 60 by applying a first preset rule. The first preset rule is assumed to be associated to a first biometric algorithm. In the example of Figure 2, the first biometric algorithm aims at detecting spoofing attempts. The first preset rule may specify which configuration data must be selected according to the security level measured for the transaction and how to select the security level from the specific element(s) identified at step 60.

The IAPMR (Impostor Attack Presentation Match Rate) reflects the chance of a copy of a genuine fingerprint to pass biometric authentication.

In one example, three security levels may have been predefined: Convenience, Intermediate and Severe. The IAPMR may be set as being less than 50% for the Convenience level. The IAPMR may be set as being less than 25% for the Intermediate level and the IAPMR may be set as being less than 10% for the Severe level.

Assuming that the elements (identified at step S60) specific to the transaction are the country of payment and the amount expressed in Euros, the first preset rule may specify that:
If the payment is to be done in the user country and its amount is below 30 Euros, then the Convenience level applies,
if the payment is to be done in the user country and its amount is between 30 and 100 Euros, then the Intermediate level applies, and
in all other cases, the Severe level applies.

At step S72, the biometric sensor of the smart card collects biometric data from the user and extracts first remarkable items from the collected biometric data. For instance, the first remarkable items may be the width of ridges, the width of the valleys or the pore size.

At step S74, the smart card performs, on the first remarkable items, the first preselected biometric algorithm (i.e. anti-spoofing algorithm). The smart card uses the first configuration data as tuning parameter of the first biometric algorithm.

At step S76, the smart card makes a decision: if the first biometric algorithm is successful (i.e. no spoofing attack has been detected), the smart card continues the checking process of the transaction at step S80. If a spoofing attack has been detected, the smart card denies the transaction.

At step S80, the smart card extracts second remarkable items from the collected biometric data. For instance, the second remarkable items may be fingerprint minutiae.

At step S82, the smart card selects a second configuration data according to the specific element(s) identified at step 60 by applying a second preset rule. The second preset rule is assumed to be associated to a second biometric algorithm. In the example of Figure 2, the second biometric algorithm aims at comparing extracted remarkable items with reference data associated with the user of the smart card.

By reference to the three security levels defined above:
- for the Convenience level, the FAR may be set as being less than 0,0001 and the FFR may be set as being less than 1%.
- for the Intermediate level, the FAR may be set as being less than 0,00005 and the FFR may be set as being less than 3%.
- for the Severe level, the FAR may be set as being less than 0,000001 and the FFR may be set as being less than 5%.

Assuming that the elements (identified at step S60) specific to the transaction are the terminal type and the location, the second preset rule may specify that:
If the transaction is to be done with an attended terminal (whatever its location), then the Convenience level applies,
If the transaction is to be done with an unattended terminal located in a building, then the Intermediate level applies, and
If the transaction is to be done with an unattended terminal located outside a building, the Severe level applies.

The second preset rule may use its own security levels or the same security levels as those defined by the first preset rule.

Although a three security level system has been presented, the number of defined security levels (and their names) may be different, provided that several security levels are defined.

At step S84, the smart card performs, on the second remarkable items, the second preselected biometric algorithm (i.e. comparison of minutiae with reference data of the user). The smart card uses the second configuration data as tuning parameter of the second biometric algorithm.

At step S86, the smart card makes a decision: if the second biometric algorithm is successful (i.e. comparison is successful), the smart card authorizes the transaction; in other words, the smart card does not deny the transaction.

The above described steps can be performed in different orders. For example, the anti-spoofing algorithm can be executed after the comparison algorithm.

First and second remarkable items may be the same. Thus only one extraction operation may be run from the biometric collected by the sensor.

First and second rules may be merged in a single one.

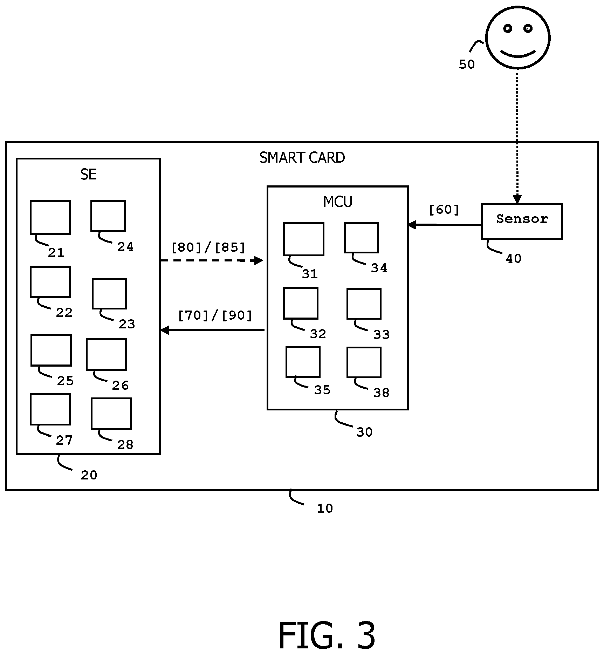

Figure 3 shows an example a diagram of a smart card according to an example of the invention.

In this example, the smart card 10 is a bank smart card.

The smart card 10 comprises a secure chip 20 (also called secure element), a biometric sensor 40 and a processing unit 30 (also named processor unit). The processing unit may be a microcontroller unit (MCU). The biometric sensor may be a conventional biometric sensor.

The processing unit 30 is coupled to the biometric sensor 40. In particular, the processing unit 30 is the only entity that can communicate directly with the sensor. The processing unit 30 is configured to retrieve biometric data 60 (also named raw biometric data) from the sensor 40.

In the example of Figure 3, the processing unit 30 comprises a biometric algorithm 31 aiming at detecting spoofing attacks on the sensor 40. The processing unit 30 comprises an analyzer engine 32 for extracting remarkable items from the biometric data collected by the sensor 40. The processing unit 30 is configured to receive from the secure element 20 a message 80 comprising the element(s) specific to the transaction. The processing unit 30 comprises a preset rule 33 and a repository 34 storing a plurality of configuration data intended to be individually used as tuning parameter of the anti-spoofing algorithm 31. The repository 34 may be implemented as any relevant container. For example it may be a file, a group of files or a database.

The processing unit 30 comprises a selector unit 35 which is designed to select a configuration data in the repository 34 according to at least one element specific to the transaction. The processing unit 30 comprises an authorizer unit 38 designed to send a message 90 reflecting the decision to pursue or stop the transaction according to the result of the execution of the anti-spoofing algorithm 31 (or a message containing the result of the execution of the anti-spoofing algorithm 31) to the secure element 20. In other words, the message 90 reflects that a spoofing attempt has been detected (or not) on the raw biometric data collected by the sensor 40.

The processing unit 30 comprises a processor and a non-volatile memory (not shown). In one embodiment, the non-volatile memory stores software instructions which are executed by the processor to perform the functions described above. In one embodiment, the functions of the processing unit 30 described above may be implemented as pure hardware solution or a combination of hardware and firmware.

In the example of Figure 3, the secure element 20 is a conventional smart card chip with additional features. The secure element 20 is able to perform a transaction with an external machine. For instance, the transaction may be a payment transaction. The secure element 20 comprises an analyzer unit 26 that is designed to identify at least one element specific to the transaction. Preferably, the analyzer unit 26 is designed to send to the processing unit 30 a message 80 comprising the element(s) specific to the transaction. The secure element 20 comprises a reference data 25 uniquely associated with the user 50. The secure element 20 comprises a biometric algorithm 21 aiming at comparing the reference data 25 with remarkable items extracted from the biometric data 60 collected by the sensor 40. The secure element 20 comprises an extracting engine 28 for extracting remarkable items from the biometric data collected by the sensor 40. The secure element 20 comprises a preset rule 23 and a repository 24 storing a plurality of configuration data intended to be individually used as tuning parameter of the biometric algorithm 21.

The secure element 20 comprises a selector unit 27 which is designed to select a configuration data in the repository 24 by using at least one specific element identified by the analyzer unit 26. The secure element 20 comprises an authorizer unit 22 designed to allows or deny a transaction to be performed by the secure element 20 according to the result of the execution of the biometric algorithm 21 and according to the content of the message 90 received from the processing unit 30.

In a preferred embodiment, the smart card is configured to deny the pending transaction without performing the biometric algorithm 21 if a spoofing attack has been detected previously by running the anti-spoofing algorithm 31.

The secure element 20 comprises a processor and a non-volatile memory (not shown). In one embodiment, the non-volatile memory stores software instructions which are executed by the processor to perform the functions described above. In one embodiment, the functions of the secure element 20 described above may be implemented as pure hardware solution or a combination of firmware and hardware.

In one embodiment, the processing unit 30 may be configured to extract remarkable items to be used by the comparison biometric algorithm 21. In this case, the processing unit 30 is adapted to send these extracted remarkable items to the secure element 20 through a dedicated message 70.

In one embodiment, the sensor 40 may be configured to extract remarkable items to be used by the anti-spoofing algorithm 31. In this case, the processing unit 30 can be devoid of analyzer engine 32 and is adapted to receive these extracted remarkable items from the sensor 40.

In one embodiment, the secure element 20 may have features equivalent to the preset rule 33, the repository 34 and the selector unit 35. Thus the secure element 20 may be configured to select the configuration data intended to be used as tuning parameter of the anti-spoofing algorithm 21 and to send it to the processing unit 30 through a dedicated message 85. The processing unit 30 may be adapted to receive and analyze the message 85 to retrieve the configuration data. In this case, the processing unit 30 can be devoid of the preset rule 33, the repository 34 and the selector unit 35.

In one embodiment, the processing unit 30 may be configured to perform both the anti-spoofing algorithm 31 and the comparison biometric algorithm 21 and the required related treatments.

In one embodiment, the secure element 20 may be configured to perform both the anti-spoofing algorithm 31 and the comparison biometric algorithm 21 and the required related treatments.

In a one embodiment, the secure element 20 may comply with Specifications from EMV® Contactless Specifications for Payment Systems Version 2.6 or Version 3.0.

In a one embodiment, the secure element 20 may comply with Visa® Integrated Circuit Card Specification (VIS) Version 1.6 or Version 2.2.

In a one embodiment, the secure element 20 may comply with M/Chip Advance Card Application Specification Version 1.2.2 or Version 1.2.3.

The processing unit 30 and the secure element 20 may communicate through ISO-7816 protocol, through SWP (Single Wire Protocol) or any relevant protocol.

Although the processing unit 30 and the secure element 20 have been described has separated components in the above-presented examples, they also may be merged in a single hardware component, like a secure microcontroller. For instance, the secure element 20 may include the processing unit 30.

Thanks to the invention it is possible to easily and smoothly adapt the behavior of preselected biometric algorithms according to the security level required for a transaction to be carried out by the smart card.

The invention allows to provide a better convenience for the user while keeping a relevant security level for the transactions, especially for sensitive transactions.

By providing versatile biometric algorithms that adapt security vs convenience according to the criticality level of the transaction, the invention avoid to freeze a generic tradeoff between convenience and security requirements. In addition, a smart card may be used for different types of transactions for which differentiated rules have been defined.

Thanks to the invention the smart cards needs to embed only one biometric algorithm dedicated to comparison and only one biometric algorithm dedicated to spoofing detection. Thus, use non-volatile memory size is limited for storage of the algorithms. In addition, only one biometric algorithm dedicated to comparison needs to be certified/validated before loading into the smart card and only one biometric algorithm dedicated to spoofing detection needs to be certified/validated before loading into the smart card. Thus the qualification process of the smart card remains unchanged.

The invention is not limited to the described embodiments or examples. In particular, the described examples and embodiments may be combined.

The invention is not limited to smart cards and applies to any biometric transaction appliance allocated to a user.

The biometric transaction appliance may embeds several biometric sensors which are used in combination.

The transaction may be a payment transaction, a request for banking authorization or a re-credit for example.

Although examples of the invention has been provided in the banking domain, the invention also applies to other domains. For example, the transaction may be an access request to a physical building, room or area. Thus a smart card can collect element(s) specific to the transaction like the type of building/infrastructure/area whose access is requested (ex: High security zone, offices of a company, public administration building, transport network) or the time (date and/or hour) the transaction is requested.

In another example, the transaction may be the user's identity authentication by an external machine.

Although examples of the invention has been provided for a fingerprint sensor, it may apply to devices embedding any biometric sensor targeting various types of data: iris, voice, face, blood, palm print, etc.

It is to be noted that the invention applies to any biometric smart cards or similar devices able to run a transaction with an external machine in contact or contactless mode.

## Claims

1. A method for authorizing a user (50) to perform a transaction involving a biometric transaction appliance (10) associated to said user, said biometric transaction appliance comprising a biometric sensor (40) collecting a biometric data (60) from a person,
**characterized in that** the biometric transaction appliance comprises a preset rule (23,33), a set (24,34) of predefined configuration data and **in that** the method comprises the steps:
- the biometric transaction appliance identifies an element (80) specific to the transaction and selects a first configuration data from said set according to both the preset rule and said element,
- the biometric transaction appliance executes a first biometric algorithm (21,31) using the first configuration data as tuning parameter of the first biometric algorithm, said first biometric algorithm being preselected in the biometric transaction appliance regardless of the element,
- the biometric transaction appliance authorizes the transaction for the user only if said first biometric algorithm is successful.

2. The method according to claim 1, wherein the method comprises the steps:
- the biometric transaction appliance selects a second configuration data from said set according to both the preset rule and said element,
- the biometric transaction appliance executes a second biometric algorithm (21,31) using the second configuration data as tuning parameter of the second biometric algorithm, said second biometric algorithm being preselected in the biometric transaction appliance regardless of the element,
- the biometric transaction appliance authorizes the transaction for the user only if both said first and second biometric algorithms are successful.

3. The method according to claim 2, wherein the biometric transaction appliance extracts remarkable items from the biometric data (60), wherein one of said first and second biometric algorithm compares said remarkable items with a reference data (25) and wherein the other biometric algorithm detects spoofing attempt.

4. The method according to claim 2, wherein the biometric transaction appliance comprises a secure element (20) configured to perform said transaction and a microcontroller (30) coupled to the biometric sensor (40) and wherein both the first and second biometric algorithms are executed either by the secure element or by the microcontroller.

5. The method according to claim 2, wherein the biometric transaction appliance comprises a secure element (20) configured to perform said transaction and a microcontroller (30) coupled to the biometric sensor (40) and wherein one said first and second biometric algorithms is executed by the secure element and the other biometric algorithm is executed by the microcontroller.

6. The method according to claim 5, wherein the secure element sends a subset of said first and second configuration data to the microcontroller.

7. The method according to claim 5, wherein the secure element sends to the microcontroller said element (80) specific to the transaction.

8. The method according to claim 1, wherein said element (80) specific to the transaction is a money amount, a currency, a location, a terminal type or a transaction type.

9. A biometric transaction appliance (10) allocated to a user (50) and comprising a biometric sensor (40) collecting a biometric data (60) from a person aiming at performing a transaction involving said biometric transaction appliance, **characterized in that** said biometric transaction appliance comprises a preset rule, a set of predefined configuration data at least a processing unit and instructions which cause said processing unit to identify an element specific to the transaction and to select a first configuration data from said set according to both the preset rule and said element, to execute a first biometric algorithm (21,31) using the first configuration data as tuning parameter of the first biometric algorithm, said first biometric algorithm being preselected in the biometric transaction appliance regardless of the element and to authorize the transaction for the user only if said first biometric algorithm is successful.

10. The biometric transaction appliance according to claim 9, wherein said instructions cause said processing unit to select a second configuration data from said set according to both the preset rule and said element, to execute a second biometric algorithm (21,31) using the second configuration data as tuning parameter of the second biometric algorithm, said second biometric algorithm being preselected in the biometric transaction appliance regardless of the element and to authorize the transaction for the user only if both said first and second biometric algorithms are successful.

11. The biometric transaction appliance according to claim 10, wherein the biometric transaction appliance extracts remarkable items from the biometric data (60), wherein one of said first and second biometric algorithm compares said remarkable items with a reference data and wherein the other biometric algorithm detects spoofing attempt.

12. The biometric transaction appliance according to claim 10, wherein the biometric transaction appliance comprises a secure element (20) configured to perform said transaction and a microcontroller (30) coupled to the biometric sensor (40) and wherein both the first and second biometric algorithms are executed either by the secure element or by the microcontroller.

13. The biometric transaction appliance according to claim 10, wherein the processing unit comprises a secure element (20) configured to perform said transaction and a microcontroller (30) coupled to the biometric sensor (40) and wherein one said first and second biometric algorithms is executed by the secure element and the other biometric algorithm is executed by the microcontroller.

14. The biometric transaction appliance according to claim 13, wherein the secure element is configured to send to the microcontroller either a subset (85) of said first and second configuration data or said element (80).

15. The biometric transaction appliance according to claim 10, wherein the biometric transaction appliance is a smart card.
